# FASCICULE DE BREVET EUROPEEN

(11) **EP 3 898 263 B1**
(45) Date de publication et mention de la délivrance du brevet: **08.02.2023**
(21) Numéro de dépôt: 19845590.9
(22) Date de dépôt: 13.12.2019
(51) Int. Cl.: B60C 1/00, C08K 5/36, C08K 5/46

(54) **COMPOSITION DE CAOUTHCOUC COMPRENANT UN COMPOSÉ POLYSULFURÉ**
KAUTSCHUKZUSAMMENSETZUNG MIT EINER POLYSULFIDVERBINDUNG
RUBBER COMPOSITION COMPRISING A POLYSULFIDE COMPOUND

(30) Priorité: 21.12.2018 FR 1873766; 30.01.2019 FR 1900831
(43) Date de publication de la demande: 27.10.2021
(73) Titulaire: COMPAGNIE GENERALE DES ETABLISSEMENTS MICHELIN, 63000 Clermont-Ferrand (FR)
(72) Inventeur: JASSELIN, Adeline, 63040 CLERMONT-FERRAND CEDEX 9 (FR); NASYBULLIN, Ruslan, 63040 CLERMONT-FERRAND CEDEX 9 (FR)
(74) Mandataire: Le Cam, Véronique Marie Christine
(86) Numéro de dépôt international: PCT/FR2019/053068
(87) Numéro de publication internationale: WO 2020/128260

(56) Documents cités:
- US-A- 3 872 061
- US-A1- 2002 107 338
- US-A1- 2006 094 831
- RAMESHA A R ET AL: "A facile entry to macrocyclic disulphides: an efficient synthesis of redox-switched crown ethers", JOURNAL OF ORGANIC CHEMISTRY, AMERICAN CHEMICAL SOCIETY, US, vol. 59, no. 6, 1 mars 1994 (1994-03-01), pages 1354-1357, XP002565144, ISSN: 0022-3263, DOI: 10.1021/JO00085A025

## Description

La présente invention concerne le domaine de la réticulation des polymères insaturés, en particulier des élastomères, et plus particulièrement des élastomères diéniques. La présente invention concerne notamment des compositions comprenant des polymères insaturés et des composés polysulfurés pouvant être des agents de réticulation.

Les polymères insaturés entrent dans la constitution de nombreux objets de la vie courante, tels que des bandages pneumatiques, des semelles de chaussures, des joints d'étanchéité, des colles, des articles en mousse, des profilés pour l'automobile, etc.... Ce sont des macromolécules comportant des doubles liaisons carbone-carbone, également appelées insaturations, dans leur chaîne principale et/ou dans leur(s) chaîne(s) latérale(s).

Il est connu d'accroître ou de modifier les propriétés mécaniques de ces polymères insaturés en créant des ponts entre leurs chaînes (réticulation). Il existe un certain nombre de procédés permettant la création de ces ponts, le plus connu étant la vulcanisation.

Le principe de la vulcanisation, aussi appelé réticulation par le soufre, réside dans la création de ponts de soufre entre différentes chaînes de macromolécules par réaction sur les doubles liaisons de ces chaînes d'un agent de vulcanisation. L'agent de vulcanisation, aussi appelé donneur de soufre, est un composé qui est capable de libérer du soufre par chauffage à la température de vulcanisation. L'agent de vulcanisation le plus connu et le plus couramment utilisé est le soufre élémentaire.

Il est cependant connu que la vulcanisation au soufre élémentaire a pour inconvénient de conduire à une résistance limitée des vulcanisâts obtenus, dû au vieillissement thermique de ces derniers (« thermal ageing »). Lorsqu'ils sont utilisés, les vulcanisâts subissent de nombreuses sollicitations, dont des sollicitations thermiques. Ces sollicitations thermiques font l'effet d'une surcuisson, qui lorsque la température du vulcanisât atteint une valeur voisine de la température de vulcanisation, occasionne un phénomène de réversion. La réversion est une rupture du réseau de réticulation par destruction ou raccourcissement des ponts de soufre créés lors de la vulcanisation ; c'est-à-dire une diminution des ponts polysulfures au profit de ponts monosulfures ou disulfures. Cette rupture du réseau modifie défavorablement les propriétés mécaniques du vulcanisât. Ainsi, l'utilisation de soufre élémentaire entraîne des contraintes sur le procédé de vulcanisation de compositions comprenant des polymères insaturés, notamment des élastomères en particulier des élastomères diéniques, par rapport à la température de vulcanisation, le temps de cuisson et le module en allongement.

Il reste donc toujours un besoin de disposer d'une composition de polymères insaturés, notamment d'élastomères en particulier d'élastomères diéniques qui ne présente pas un phénomène de réversion ou limité aux hautes températures de réticulation tout en conservant, voire en améliorant les propriétés d'allongement rupture.

Plusieurs solutions ont été mises au point afin de répondre aux inconvénients d'un système de réticulation au soufre élémentaire. On peut citer, par exemple, l'utilisation d'additifs spécifiques appelés agents anti-réversion qui permettent de stabiliser thermiquement les vulcanisâts.

Une autre solution a consisté à développer des nouveaux agents de réticulation permettant la formation de ponts de soufre entre les chaînes de macromolécules tout en limitant le phénomène de réversion. A titre d'exemple, le document US2002/107338 décrit la synthèse d'un agent de réticulation : le 1,2,3,4-tétrathiécane.

Il est toujours intéressant pour les industriels de disposer de compositions comprenant des polymères insaturés susceptibles d'être réticulés à haute température, afin de gagner du temps, et d'améliorer encore les propriétés d'allongement rupture de telles compositions.

La Demanderesse a maintenant découvert que les objectifs précités peuvent être atteints grâce à l'utilisation d'un nouvel agent de réticulation qui va être détaillée ci-après.

Ainsi selon un premier aspect, l'invention concerne une composition à base d'au moins un polymère insaturé, une charge renforçante, et un composé polysulfuré de formule générale (I) : 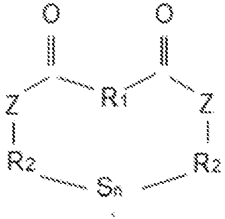 dans laquelle :
n est un nombre supérieur ou égal à 2,
Z représente un atome O ou le groupe -N(H)-,
et R₁ et R₂ représentent chacun un groupement hydrocarboné divalent linéaire ou ramifié, comportant de 1 à 18 atomes de carbone.

De préférence, le polymère insaturé de la composition est un élastomère diénique et plus préférentiellement il est choisi dans le groupe constitué par le caoutchouc naturel, les polyisoprènes de synthèse, les polybutadiènes, les copolymères d'isoprène, les copolymères de butadiène et les mélanges de ces élastomères diéniques.

Selon une variante préférée de l'invention, R₁ et R₂ représentent un radical alkylène comportant de 1 à 18 atomes de carbone, de préférence de 1 à 10 atomes de carbone et encore plus préférentiellement R1 et R2 sont des alkylènes en C1-C7.

Avantageusement, n représente un nombre allant de 2 à 6, plus préférentiellement de 2 à 4.

Selon un mode de réalisation préféré de l'invention, Z représente un atome O et plus préférentiellement le composé polysulfuré consiste en 1,8-dioxa-4,5-dithiacyclotridecane-9,13-dione.

Selon un autre mode de réalisation préféré de l'invention, Z représente un groupe -N(H)- et plus préférentiellement le composé polysulfuré consiste en 1,2-dithia-5,11-diazacyclotridecane-6,10-dione.

Avantageusement le taux du composé polysulfure de formule générale (I) dans la composition est compris dans un domaine allant de 0,5 à 10 pce, de préférence allant de 0,5 à 5 pce, de préférence allant de 0,5 à 3 pce.

De préférence, la charge renforçante de la composition est choisie parmi une charge renforçante inorganique, le noir de carbone et leurs mélanges.

Selon une variante préférée de l'invention, la charge renforçante de la composition comprend majoritairement en poids du noir de carbone.

Selon une autre variante préférée de l'invention, la charge renforçante de la composition comprend majoritairement en poids de la silice.

Préférentiellement la composition comprend en outre du soufre élémentaire à un taux inférieur à 1 pce, de préférence inférieur ou égal à 0,5 pce et plus préférentiellement la composition ne comprend pas de soufre élémentaire.

De préférence, la composition comprend au moins un accélérateur de vulcanisation choisi dans le groupe constitué par la diphényle guanidine (DPG), la triphényle guanidine (TPG), la diorthotolyl guanidine (DOTG), la o-tolylbiguanide (OTBG), le disulfure de benzothiazole (MBTS), le disuflure de tetraméthylthiurame (TMTD), le disulfure de tetrabenzylthiurame (TBzTD), le dibenzyldithiocarbamate de zinc (ZBEC), le zinc N,N'-dimethylcarbamodithioates (ZDMC), le zinc N,N'-diethylcarbamodithioates (ZDEC), le zinc N,N'-dibutylcarbamodithioates (ZDBC), le zinc N,N'-dibenzylcarbamodithioates (ZDBC), le zinc isopropylxanthate (ZIX), et leurs mélanges.

Il a en effet été trouvé que l'utilisation d'un composé polysulfuré de formule générale (I) permet, de manière surprenante, de réticuler à des hautes températures des compositions à base d'au moins un polymère insaturé, en particulier au moins un élastomère et plus particulièrement au moins un élastomère diénique tout en limitant le phénomène de réversion et en améliorant les propriétés allongement rupture de ces compositions et notamment leur cinétique de réticulation.

Ainsi, avantageusement, les vulcanisâts obtenus à partir des compositions de l'invention présentent l'avantage d'être plus stables thermiquement, notamment aux hautes températures. Les compositions de l'invention présentent également l'avantage d'être produites plus rapidement sans une diminution de leurs propriétés mécaniques, notamment sans diminution de leurs propriétés d'allongement rupture.

Selon un second aspect, l'invention concerne un article comprenant au moins une composition telle que définie-ci dessus. De préférence, cet article est un bandage pneumatique.

Selon un troisième aspect, l'invention concerne un procédé de fabrication d'une composition comprenant au moins un polymère insaturé, au moins une charge renforçante et au moins un composé polysulfuré de formule générale (I) 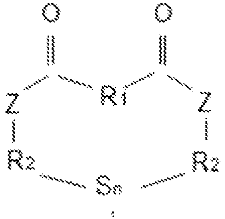 dans laquelle :
n est un nombre supérieur ou égal à 2,
Z représente un atome O ou le groupe -N(H)-,
et R₁ et R₂ représentent chacun un groupement hydrocarboné divalent linéaire ou ramifié,
comportant de 1 à 18 atomes de carbone
ledit procédé comprenant au moins les étapes suivantes :
   a) on incorpore au polymère insaturé, dans un mélangeur, la charge renforçante,
   b) on malaxe thermomécaniquement le mélange de l'étape (a) en une ou plusieurs fois jusqu'à atteindre une température maximale inférieure ou égale à 200°C,
   c) on refroidit le mélange obtenu à l'issue de l'étape (b) à une température inférieure à 100°C;
   d) on incorpore au mélange obtenu à l'issue de l'étape (c) ledit composé polysulfuré de formule générale (I) et,
   e) on malaxe le mélange obtenu à l'issue de l'étape (d) jusqu'à une température inférieure à 120°C.

L'invention ainsi que ses avantages seront aisément compris à la lumière de la description et des exemples de réalisation.

### Description détaillée

Dans la présente description, sauf indication expresse différente, tous les pourcentages (%) indiqués sont des pourcentages en masse.

D'autre part, tout intervalle de valeurs désigné par l'expression « entre a et b » représente le domaine de valeurs allant de plus de « a » à moins de « b » (c'est-à-dire bornes a et b exclues) tandis que tout intervalle de valeurs désigné par l'expression « de a à b » signifie le domaine de valeurs allant de « a » jusqu'à « b » (c'est-à-dire incluant les bornes strictes a et b).

Dans la présente demande, on entend par « pce » (usuellement « phr » en anglais) la partie en poids d'un constituant pour cent parties en poids du ou des élastomères, c'est-à-dire du poids total du ou des élastomères.

Lorsque les objets de la présente invention comprennent des compositions dépourvues d'élastomère, l'homme du métier comprendra que le terme « pce » s'entend comme la partie en poids d'un constituant de la composition pour cent parties en poids du ou des polymères insaturés de cette composition.

Dans le cadre de l'invention, les produits contenant du carbone mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

### Composition

Un premier objet de l'invention concerne une composition à base d'au moins un polymère insaturé, une charge renforçante et d'au moins un composé polysulfuré de formule générale (I) 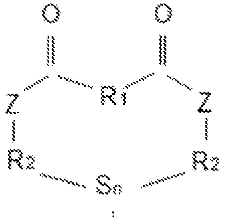 dans laquelle :
n est un nombre supérieur ou égal à 2,
Z représente un atome O ou le groupe -N(H)-,
et R₁ et R₂ représentent chacun un groupement hydrocarboné divalent linéaire ou ramifié, comportant de 1 à 18 atomes de carbone.

Par l'expression «composition à base de», il faut entendre une composition comportant le mélange et/ou le produit de réaction in situ des différents constituants de base utilisés, certains de ces constituants pouvant réagir et/ou étant destinés à réagir entre eux, au moins partiellement, lors des différentes phases de fabrication de la composition, ou lors de la cuisson ultérieure, modifiant la composition telle qu'elle est préparée au départ. Ainsi les compositions telles que mises en oeuvre pour l'invention peuvent être différentes à l'état non réticulé et à l'état réticulé.

### Polymère insaturé

Comme indiqué précédemment, la composition de l'invention comprend au moins un polymère insaturé, c'est-à-dire un seul polymère insaturé ou un mélange de polymères insaturés.

Préférentiellement, le polymère insaturé est un élastomère.

Plus préférentiellement encore, le polymère insaturé est un élastomère diénique.

Par élastomère (ou « caoutchouc », les deux termes étant considérés comme synonymes) du type « diénique », on rappelle ici que doit être compris de manière connue un (on entend un ou plusieurs) élastomère issu au moins en partie (i.e., un homopolymère ou un copolymère) de monomères diènes (monomères porteurs de deux doubles liaisons carbone-carbone, conjuguées ou non).

Les élastomères diéniques peuvent être classés dans deux catégories : « essentiellement insaturés » ou « essentiellement saturés ».

On entend en général par « essentiellement insaturé », un élastomère diénique issu au moins en partie de monomères diènes conjugués, ayant un taux de motifs ou unités d'origine diénique (diènes conjugués) qui est supérieur à 15 % (% en moles). Dans la catégorie des élastomères diéniques « essentiellement insaturés », on entend en particulier par élastomère diénique « fortement insaturé » un élastomère diénique ayant un taux de motifs d'origine diénique (diènes conjugués) qui est supérieur à 50 % (% en moles).

On entend en général par « essentiellement saturé », un élastomère diénique issu au moins en partie de monomères diènes conjugués, ayant un taux de motifs ou unités d'origine diénique (diènes conjugués) qui est inférieur à 15 % (% en moles), tels que les caoutchoucs butyle ou les copolymères de diènes et d'alpha-oléfines type EPDM.

Ces définitions étant données, on entend plus particulièrement par élastomère diénique susceptible d'être utilisé dans les compositions selon l'invention:
a) tout homopolymère pouvant être obtenu par polymérisation d'un monomère diène conjugué ayant de 4 à 12 atomes de carbone;
b) tout copolymère obtenu par copolymérisation d'un ou plusieurs diènes conjugués entre eux ou avec un ou plusieurs composés vinyle aromatique ayant de 8 à 20 atomes de carbone;
c) un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
d) un copolymère d'isobutène et d'isoprène (caoutchouc butyle), ainsi que les versions halogénées, en particulier chlorées ou bromées, de ce type de copolymère.

L'invention s'applique à tout type d'élastomère diénique. Lorsque la composition est destinée à la préparation de bandages pneumatiques, l'homme du métier comprendra que la présente invention est de préférence mise en oeuvre avec des élastomères diéniques essentiellement insaturés, en particulier du type (a) ou (b) ci-dessus.

A titre de diènes conjugués conviennent notamment le butadiène-1,3, le 2-méthyl-1,3-butadiène (ou isoprène), les 2,3-di(alkyle en C1-C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, l'aryl-1,3-butadiène, le 1,3-pentadiène, le 2,4-hexadiène. A titre de composés vinylaromatiques conviennent par exemple le styrène, l'ortho-, méta-, para-méthylstyrène, le mélange commercial « vinyle-toluène », le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinylaromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que aminobenzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778, US 6 013 718 et WO 2008/141702), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909, US 6 503 973, WO 2009/000750 et WO 2009/000752). Comme autres exemples d'élastomères fonctionnalisés, on peut citer également des élastomères (tels que SBR, BR, NR ou IR) du type époxydés. Ces élastomères fonctionnalisés peuvent être utilisés en coupage entre eux ou avec des élastomères non fonctionnalisés. Par exemple, on peut utiliser un élastomère fonctionnalisé silanol ou polysiloxane ayant une extrémité silanol, en mélange avec un élastomère couplé et/ou étoilé à l'étain (décrit dans WO 11/042507), ce dernier représentant un taux compris de 5 à 50%, par exemple de 25 à 50%.

Conviennent les polybutadiènes et en particulier ceux ayant une teneur (% molaire) en unités -1,2 comprise entre 4% et 80% ou ceux ayant une teneur (% molaire) en cis-1,4 supérieure à 80%, les polyisoprènes, les copolymères de butadiène-styrène et en particulier ceux ayant une Tg (température de transition vitreuse Tg, mesurée selon ASTM D3418) comprise entre 0°C et -70°C et plus particulièrement entre -10°C et -60°C, une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%, les copolymères de butadiène-isoprène et notamment ceux ayant une teneur en isoprène comprise entre 5% et 90% en poids et une Tg de -40°C à -80°C, les copolymères isoprène-styrène et notamment ceux ayant une teneur en styrène comprise entre 5% et 50% en poids et une Tg comprise entre -5°C et -60°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiène-styrène-isoprène ayant une Tg comprise entre -20°C et -70°C.

Préférentiellement, l'élastomère diénique de la composition de l'invention est choisi dans le groupe des élastomères diéniques fortement insaturés constitué par les polybutadiènes (en abrégé BR), les polyisoprènes (IR) de synthèse, le caoutchouc naturel (NR), les copolymères de butadiène, les copolymères d'isoprène et les mélanges de ces élastomères diéniques. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR), les copolymères de butadiène-acrylonitrile (NBR), les copolymères de butadiène-styrène-acrylonitrile (NSBR) ou un mélange de deux ou plus de ces composés. Dans le cas d'un élastomère SBR (ESBR ou SSBR), on utilise notamment un SBR ayant une teneur en styrène moyenne, par exemple comprise entre 20% et 35% en poids, ou une teneur en styrène élevée, par exemple de 35 à 45%, une teneur en liaisons vinyliques de la partie butadiénique comprise entre 15% et 70%, une teneur (% molaire) en liaisons trans 1,4 comprise entre 15% et 75% et une Tg comprise entre -10°C et -55°C ; un tel SBR peut être avantageusement utilisé en mélange avec un BR possédant de préférence plus de 90% (% molaire) de liaisons cis 1,4. Plus préférentiellement encore, l'élastomère diénique est le caoutchouc naturel ou un polyisoprène de synthèse.

Les élastomères diéniques, qu'ils soient fonctionnalisés ou non, peuvent être utilisés en coupage (mélange) entre eux. Ainsi, les compositions conformes à l'invention peuvent contenir préférentiellement un seul élastomère diénique, fonctionnalisé ou non, ou bien un mélange de plusieurs élastomères diéniques, fonctionnalisés ou non, ce ou ces élastomères diéniques pouvant être utilisés en association avec tout type d'élastomère synthétique autre que diénique, voire avec des polymères autres que des élastomères, par exemple des polymères thermoplastiques.

Préférentiellement, le taux d'élastomère diénique dans la composition est de plus de 50 pce (c'est-à-dire de 50 à 100 pce), plus préférentiellement d'au moins 60 pce (c'est-à-dire de 60 à 100 pce), de manière plus préférentielle d'au moins 70 pce (c'est-à-dire de 70 à 100 pce), plus préférentiellement encore d'au moins 80 pce (c'est-à-dire de 80 à 100 pce) et de manière très préférentielle d'au moins 90 pce (c'est-à-dire de 90 à 100 pce). En particulier selon ce mode de réalisation, le taux d'élastomère diénique est très préférentiellement de 100 pce.

### Charge

Les compositions selon l'invention avec seulement les ingrédients décrits précédemment suffisent à répondre au problème technique posé, en particulier celui d'obtenir des compositions ayant une cinétique de réticulation améliorée tout en limitant voir supprimant le phénomène de réversion aux hautes températures de vulcanisation.

Toutefois, les compositions de l'invention peuvent comprendre, en outre, des ingrédients additionnels.

Par exemple, dans un mode de réalisation préféré, la composition de l'invention comprend en outre, au moins une charge ; c'est-à-dire une seule charge ou un mélange de plusieurs charges.

A titre de charge, on peut citer les charges renforçantes, les charges semi-renforçantes et les charges inertes.

Selon un mode de réalisation préféré, les compositions de l'invention comprennent une charge renforçante ou un mélange de plusieurs charges renforçantes.

On entend par charge renforçante au sens de la présente invention, tout type de charges connues pour ses capacités à renforcer une composition de caoutchouc utilisable notamment pour la fabrication d'un bandage pneumatique, par exemple une charge organique telle que du noir de carbone ou bien encore une charge inorganique renforçante.

Préférentiellement, la charge renforçante est choisie parmi le noir de carbone, une charge inorganique renforçante (de préférence de la silice) et leurs mélanges.

Selon un mode de réalisation préféré, la charge renforçante comprend du noir de carbone.

Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772). Les noirs de carbone pourraient être par exemple déjà incorporés à un élastomère isoprénique sous la forme d'un masterbatch (voir par exemple demandes WO 97/36724 ou WO 99/16600).

Comme noirs de carbone conviennent préférentiellement les noirs de carbone renforçants ayant une surface spécifique CTAB (déterminée selon la norme française NF T 45-007 de novembre 1987, méthode B) supérieure ou égale à 90 m2/g. Plus préférentiellement, conviennent les noirs de carbone ayant une surface spécifique supérieure CTAB supérieure ou égale à 120 m²/g, de manière plus préférentielle une surface spécifique CTAB comprise dans un domaine allant de 120 m²/g à 180 m²/g.

Préférentiellement, la charge renforçante peut comprendre une charge organique autre que le noir de carbone.

Comme exemples de charges organiques autres que des noirs de carbone, on peut citer les charges organiques de polyvinyle fonctionnalisé telles que décrites dans les demandes WO-A-2006/069792, WO-A-2006/069793, WO-A-2008/003434 et WO-A-2008/003435.

Selon un autre mode de réalisation préférée de la composition de l'invention, la charge renforçante peut comprendre une charge inorganique renforçante, de préférence une silice.

Par « charge inorganique renforçante », doit être entendu dans la présente demande, par définition, toute charge inorganique ou minérale (quelles que soient sa couleur et son origine (naturelle ou de synthèse), encore appelée charge « blanche », charge « claire » voire « charge non noire » (« non-black filler ») par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu, on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceux, en particulier de la silice (SiO₂), ou du type alumineux, en particulier de l'alumine (Al2O3).

Préférentiellement, la composition peut contenir un type de silice ou un coupage de plusieurs silices. La silice utilisée peut être toute silice renforçante connue de l'homme du métier, notamment toute silice précipitée ou pyrogénée présentant une surface spécifique BET ainsi qu'une surface spécifique CTAB toutes deux inférieures à 450 m²/g, de préférence de 30 à 400 m²/g. La surface spécifique BET est déterminée par adsorption de gaz à l'aide de la méthode de Brunauer-Emmett-Teller décrite dans « The Journal of the American Chemical Society » (Vol. 60, page 309, février 1938), et plus précisément selon une méthode adaptée de la norme NF ISO 5794-1, annexe E de juin 2010 [méthode volumétrique multipoints (5 points) - gaz: azote - dégazage sous vide: une heure à 160°C - domaine de pression relative p/po : 0,05 à 0,2]. A titres de silices précipitées hautement dispersibles (dites « HDS »), on citera par exemple les silices « Ultrasil 7000 » et « Ultrasil 7005 » de la société Evonik, les silices « Zeosil » 1165MP, 1135MP et 1115MP de la société Solvay, la silice « Hi-Sil EZ150G » de la société PPG, les silices « Zeopol » 8715, 8745 et 8755 de la Société Huber, des silices précipitées traitées telles que par exemple les silices « dopées » à l'aluminium décrites dans la demande EP-A-0735088 ou les silices à haute surface spécifique telles que décrites dans la demande WO03016387.

Lorsqu'une charge inorganique renforçante est présente dans la composition, en particulier une silice, on peut utiliser de manière connue un agent de couplage (ou agent de liaison) au moins bifonctionnel destiné à assurer une connexion suffisante, de nature chimique et/ou physique, entre la charge inorganique (surface de ses particules) et l'élastomère diénique, en particulier des organosilanes ou des polyorganosiloxanes bifonctionnels.

On utilise notamment des silanes polysulfurés, dits « symétriques » ou « asymétriques » selon leur structure particulière, tels que décrits par exemple dans les demandes WO03/002648 (ou US 2005/016651) et WO03/002649 (ou US 2005/016650).

Lorsque les compositions de caoutchouc conformes à l'invention contiennent des agents de couplage, leur taux est préférentiellement compris dans un domaine allant de 4 à 12 pce, plus préférentiellement de 3 à 8 pce.

Ces compositions peuvent optionnellement également contenir, en complément des agents de couplage, des activateurs de couplage, des agents de recouvrement des charges inorganiques ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur faculté de mise en oeuvre à l'état cru, ces agents, bien connus de l'homme de l'art, étant par exemple des silanes hydrolysables tels que des alkylalkoxysilanes, des polyols, des acides gras, des polyéthers, des amines primaires, secondaires ou tertiaires, des polyorganosiloxanes hydroxylés ou hydrolysables. On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

L'homme du métier comprend qu'à titre de charge équivalente de la charge inorganique renforçante décrite plus haut, pourrait être utilisée une charge renforçante d'une autre nature, notamment organique, dès lors que cette charge renforçante est recouverte d'une couche inorganique telle que silice, ou bien comporte à sa surface des sites fonctionnels, notamment hydroxyles, nécessitant l'utilisation d'un agent de couplage pour établir la liaison entre la charge et l'élastomère.

La personne du métier sait adapter le taux total de charge renforçante totale (noir de carbone, silice ou éventuellement un mélange de noir de carbone et de silice), en fonction de l'utilisation de la composition qui est envisagée. De manière préférentielle, notamment lorsque la composition est utilisée pour la fabrication d'un bandage pneumatique, ce taux total de charge renforçante est compris dans un domaine allant de 5 à 250 pce, préférentiellement de 40 à 200 pce.

Selon un mode de réalisation préféré de la composition de l'invention, la charge renforçante (ou un mélange de charge renforçante) comprend majoritairement en poids du noir de carbone. Le noir de carbone utilisé comme charge renforçante, est majoritaire en poids ; c'est-à-dire qu'il représente le plus fort taux en pce parmi les charges renforçantes de la composition. Préférentiellement, le noir de carbone représente plus de 50 % en poids (>50 % en poids) du poids total de la charge renforçante, préférentiellement plus de 60% en poids. D'autres types de charge renforçante peuvent être utilisés à titre minoritaire par rapport au noir de carbone dans les compositions conforme à l'invention, notamment d'autres charges organiques renforçantes ou des charges inorganiques renforçantes telles que la silice. Une charge inorganique renforçante est minoritaire lorsque son poids ne représente pas le plus fort taux en pce parmi les charges renforçante de la composition ; c'est-à-dire la charge inorganique renforçante représente moins de 50 % en poids (< 50% en poids) du poids total de la charge renforçante, préférentiellement moins de 40 % en poids.

Selon ce mode de réalisation, le taux de noir de carbone dans la composition de l'invention est alors préférentiellement compris dans un domaine allant de 20 à 150 pce, de préférence de 30 à 90 pce, plus préférentiellement de 35 à 80 pce, l'optimum étant bien entendu différent selon les applications particulières visées. Dans ce mode de réalisation, le taux de silice dans la composition est préférentiellement inférieur à 10 pce.

Selon un autre mode de réalisation préféré de la composition de l'invention, la charge renforçante (ou un mélange de charge renforçante) comprend majoritairement en poids de la silice. La silice utilisée comme charge renforçante, est majoritaire en poids ; c'est-à-dire qu'elle représente le plus fort taux en pce parmi les charges renforçantes de la composition. Préférentiellement, la silice représente plus de 50 % en poids (>50 % en poids) du poids total de la charge renforçante, préférentiellement plus de 60% en poids. D'autres types de charge renforçante peuvent être utilisés à titre minoritaire par rapport à la silice dans les compositions conformes à l'invention, notamment d'autres charges organiques renforçantes tel que le noir de carbone. Le noir de carbone est minoritaire lorsque son poids ne représente pas le plus fort taux en pce parmi les charges renforçantes de la composition ; c'est-à-dire que le noir de carbone représente moins de 50 % en poids (< 50% en poids) du poids total de la charge renforçante, préférentiellement moins de 40 % en poids.

Selon ce mode de réalisation, le taux de silice dans la composition de l'invention est alors préférentiellement compris dans un domaine allant de 20 à 150 pce, de préférence de 30 à 90 pce, plus préférentiellement de 35 à 80 pce, l'optimum étant bien entendu différent selon les applications particulières visées. Dans ce mode de réalisation, le taux de noir de carbone dans la composition est préférentiellement inférieur à 10 pce, et plus préférentiellement de 5 pce.

Comme vu précédemment, selon un mode de réalisation préféré, la composition de l'invention peut comprendre au moins une charge semi-renforçante. Les charges semi-renforçantes ne sont pas capables de renforcer à elles seules une composition de caoutchouc destinée à la fabrication de pneumatiques, en d'autres termes elles ne sont pas aptes à remplacer, dans sa fonction de renforcement, un noir de carbone conventionnel de grade pneumatique, cependant elles permettent une augmentation du module en traction d'une composition de caoutchouc dans laquelle elles sont incorporées, c'est pourquoi on les nomme « semi-renforçantes ». A titre de charge semi-renforçante, on peut citer le graphite.

Selon un autre mode de réalisation, la composition de l'invention peut comprendre ou moins une charge inerte. La ou les charges inertes utilisables dans les compositions de l'invention peuvent être choisies parmi la craie, l'argile, la bentonite, le talc, le kaolin, des microbilles de verres, des paillettes de verre et un mélange de ces composés.

### Système de réticulation

Comme vu précédemment, la composition de l'invention comprend au moins un composé polysulfuré de formule générale (I) 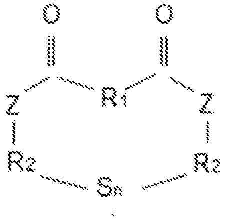 dans laquelle :
n est un nombre supérieur ou égal à 2,
Z représente un atome O ou le groupe -N(H)-,
et R₁ et R₂ représentent chacun un groupement hydrocarboné divalent linéaire ou ramifié, comportant de 1 à 18 atomes de carbone.

Le composé polysulfuré de formule générale (I) peut être un agent de réticulation. Il peut avantageusement remplacer le soufre élémentaire utilisé usuellement en réticulation. Il peut également être utilisé en complément d'un système de réticulation, comme agent anti-réversion.

Par « groupement hydrocarboné divalent », on entend au sens de la présente invention un groupement comprenant des atomes de carbone et d'hydrogène. Le groupement hydrocarboné peut être éventuellement ramifié, notamment substitué par des groupements alkyles en C1-C6, par le phényle et/ou par le benzyle. Le groupement hydrocarboné peut également et préférentiellement être linéaire, c'est-à-dire qu'il n'est pas ramifié. Il peut être aussi cyclique. Il peut éventuellement comprendre une ou plusieurs doubles liaisons carbone-carbone.

Préférentiellement dans la formule générale (I), les radicaux R₁ et R₂ représentent respectivement un radical alkylène comportant de 1 à 18 atomes de carbone, de préférence de 1 à 10 atomes de carbone, plus préférentiellement encore de 1 à 7 atomes de carbone.

De préférence, n représente un nombre compris dans un domaine allant de 2 à 6, plus préférentiellement de 2 à 4.

Les composés polysulfurés de formule générale (I), y compris leurs variantes préférées, peuvent être des mélanges de composés de formule générale (I) auquel cas les indices n sont des valeurs moyennes. Ces indices peuvent donc être des nombres entiers comme des nombres fractionnaires. Egalement, le composé polysulfuré peut se présenter sous forme d'un mélange de forme cyclique et non cyclique.

Selon un mode de réalisation préféré de l'invention, le composé polysulfuré consiste en 1,8-dioxa-4,5-dithiacyclotridecane-9,13-dione.

Selon un mode de réalisation préféré de l'invention, le composé polysulfuré consiste en 1,2-dithia-5,11-diazacyclotridecane-6,10-dione.

Préférentiellement, la composition présente un taux de composé polysulfuré de formule générale (I) compris dans un domaine allant de 0,5 à 10 pce, de préférence allant de 0,5 à 5 pce, et plus préférentiellement de 0,5 à 3 pce.

Dans le système de réticulation comprenant le composé polysulfuré décrit ci-dessus, système de réticulation de base de l'invention, peuvent venir s'ajouter, incorporés au cours de la première phase non-productive et/ou au cours de la phase productive telles que décrites ultérieurement, divers co-agents de réticulation connus de l'homme du métier.

Ces co-agents, optionnels, peuvent être des activateurs de vulcanisation, des accélérateurs de vulcanisation, bien connus de l'homme du métier.

A titre d'activateurs de vulcanisation, on peut citer l'oxyde de zinc et les dérivés d'acide stéarique. On entend par « dérivé d'acide stéarique », de l'acide stéarique ou un sel d'acide stéarique, tous deux étant bien connus de l'homme du métier. A titre d'exemple de sel d'acide stéarique utilisable dans le cadre de la présente invention, on peut citer notamment le stéarate de zinc ou de magnésium.

A titre d'accélérateurs de vulcanisation bien connus de l'homme du métier, on choisira de préférence dans le groupe constitué par les thiazoles, les sulfénamides, les guanidines, les amines, les aldéhyde-amines, les dithiophosphates, les xanthates, les thiurames, les dithiocarbamates et leurs mélanges. En particulier, on préfère pour la présente invention, le benzothiazyl-2-cyclohexyl sulfénamide (CBS), le benzothiazyldicyclohexy-1 sulfénamide (DCBS), le benzothiazoyl-2-tert.-butyl sulfénamide (TBBS), le 2-mercaptobenzothiazole (MBT), le disulfure de benzothiazole (MBTS), le sel de zinc ou de sodium de 2-mercaptobenzothiazole (ZMBT), le morpholide de benzothiazyl-2-sulfène (MBS), la diphényle guanidine (DPG), la triphényle guanidine (TPG), la diorthotolyl guanidine (DOTG), la o-tolylbiguanide (OTBG), le disulfure de benzothiazole (MBTS), le disuflure de tetraméthylthiurame (TMTD), le disulfure de tetrabenzylthiurame (TBzTD), le dibenzyldithiocarbamate de zinc (ZBEC), le zinc N,N'-dimethylcarbamodithioates (ZDMC), le zinc N,N'-diethylcarbamodithioates (ZDEC), le zinc N,N'-dibutylcarbamodithioates (ZDBC), le zinc N,N'-dibenzylcarbamodithioates (ZDBC), le zinc isopropylxanthate (ZIX) et leurs mélanges.

Selon un mode de réalisation préféré, la composition comprend un accélérateur de vulcanisation complémentaire, différent de l'accélérateur précédent, décrit ci-dessus, choisi dans le groupe constitué par le benzothiazyl-2-cyclohexyl sulfénamide (CBS), le benzothiazyldicyclohexy-1 sulfénamide (DCBS), le benzothiazoyl-2-tert.-butyl sulfénamide (TBBS), le 2-mercaptobenzothiazole (MBT), le disulfure de benzothiazole (MBTS), le sel de zinc ou de sodium de 2-mercaptobenzothiazole (ZMBT), le morpholide de benzothiazyl-2-sulfène (MBS).

L'homme du métier sait ajuster le taux de ces co-agents, activateurs et accélérateurs de vulcanisation dans la composition de l'invention en fonction des différents constituants de cette composition et en fonction de l'utilisation de la composition.

Les compositions pour les besoins de l'invention peuvent contenir du soufre élémentaire, de manière complémentaire au composé polysulfuré. Cependant de manière préférentielle pour tirer tout le bénéfice de l'invention, les compositions ne comprennent pas de soufre élémentaire ou en comprennent moins de 1 pce, de préférence moins de 0,5 pce et plus préférentiellement moins de 0,2 pce.

Les composés polysulfurés utiles pour l'invention peuvent être préparés par tout moyen connu de l'homme de l'art.

Par exemple, on peut utiliser un procédé selon le schéma réactionnel suivant :

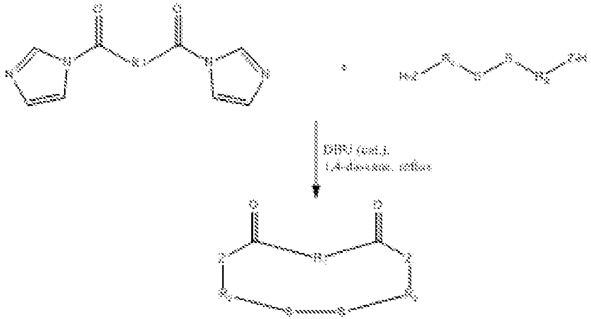

La définition du groupement R₁ et R₂ de la formule générale (I) s'applique également aux groupements représentés ci-dessus.

### Autres additifs

Les compositions de l'invention peuvent optionnellement comprendre, en outre, tout ou partie des additifs usuels habituellement utilisés dans les compositions d'élastomères, comme par exemple des pigments, des agents de protection tels que cires anti-ozone, anti-ozonants chimiques, anti-oxydants, des agents plastifiants tels que les huiles plastifiantes ou les résines hydrocarbonées bien connues de l'homme de l'art, des résines renforçantes, des accepteurs (par exemple résine phénolique novolaque) ou des donneurs de méthylène (par exemple HMT ou H3M).

Il va de soi que l'invention concerne les compositions à l'état dit « cru » ou non réticulé (i.e. avant réticulation) ou à l'état dit « cuit » ou réticulé (i.e. après réticulation).

### Article

Les compositions de la présente invention peuvent être utilisées pour la préparation d'articles.

Ainsi un autre objet de la présente invention concerne un article comprenant au moins une composition telle que définie ci-dessus.

A titre d'article, on peut citer un objet pneumatique, un produit semi-fini pour bandage pneumatique, un article en mousse, des bandes transporteuses, des joints notamment d'étanchéité, des profilés pour l'automobile, des amortisseurs, des couches pour la fabrication de câbles, des semelles de chaussures etc.

Par « objet pneumatique », on entend au sens de la présente invention tout objet qui prend sa forme utilisable quand on le gonfle avec un gaz (ou des gaz) de gonflage tel que l'air par exemple.

A titre d'exemples de tels objets pneumatiques, on peut citer les bateaux pneumatiques, les bandages pneumatiques, les ballons ou balles utilisés pour le jeu ou le sport.

Préférentiellement, l'article comprenant au moins une composition telle que décrite ci-dessus est un objet pneumatique un bandage pneumatique. Ce bandage pneumatique peut être destiné à équiper notamment les véhicules sans moteur tels que les bicyclettes, les véhicules à moteur de type tourisme, les SUV (Sport Utility Vehicles), les deux roues (notamment les motos), les avions, les véhicules industriels choisis parmi les camionnettes, les poids-lourds (c'est-à-dire le métro, les bus, les engin routiers (camions et remorques)), les véhicules hors la route, tels que les engins agricoles ou de génie civil, les autres véhicules de transports ou de manutention.

Un autre article peut être un produit semi-fini pour un bandage pneumatique. Ce peut être tout type bande de gommes, telle que notamment des bandes de roulement, des sous-couches, des nappes de flancs, des nappes de bourrelets, des nappes de protecteurs, des nappes de sous-couches, des nappes de blocs de caoutchouc.

On peut également citer les articles en mousse à base de la composition ci-dessus et d'agents gonflants ayant des propriétés isolantes, insonorisantes, anti-vibrations ou de renfort, utilisée dans le domaine du sport et des loisirs- comme structure de ballon, épaulette de protection. Par « mousse » ou « structure de mousse », on entend un objet ou article ou matériau de densité inférieure à celle du produit de départ.

### Obtention de la composition

Les compositions sont fabriquées dans des mélangeurs appropriés, en utilisant par exemple deux phases de préparation successives selon une procédure générale bien connue de l'homme du métier : une première phase de travail ou malaxage thermomécanique (parfois qualifiée de phase « non-productive ») à haute température, jusqu'à une température maximale comprise entre 130°C et 200°C, de préférence entre 145°C et 185°C, suivie d'une seconde phase de travail mécanique (parfois qualifiée de phase « productive ») à plus basse température, typiquement inférieure à 120°C, par exemple entre 60°C et 100°C, phase de finition au cours de laquelle est incorporé l'agent de réticulation ou le système de réticulation.

Ainsi un autre objet de la présente invention concerne un procédé de fabrication d'une composition comprenant au moins un polymère insaturé, au moins une charge, de préférence au moins une charge renforçante telle que décrite ci-dessus et d'au moins un composé polysulfuré de formule générale (I) 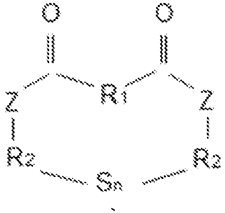 dans laquelle :
n est un nombre supérieur ou égal à 2,
Z représente un atome O ou le groupe -N(H)-,
et R₁ et R₂ représentent chacun un groupement hydrocarboné divalent linéaire ou ramifié, comportant de 1 à 18 atomes de carbone.
ledit procédé comprenant au moins les étapes suivantes :
   a) on incorpore au polymère insaturé, dans un mélangeur, la charge,
   b) on malaxe thermomécaniquement le mélange de l'étape (a) en une ou plusieurs fois jusqu'à atteindre une température maximale inférieure ou égale à 200°C,
   c) on refroidit le mélange obtenu à l'issue de l'étape (b) à une température inférieure à 100°C;
   d) on incorpore au mélange obtenu à l'issue de l'étape (c) ledit composé polysulfuré de formule générale (I) et,
   e) on malaxe le mélange obtenu à l'issue de l'étape (d) jusqu'à une température inférieure à 120°C.

Le procédé peut comprendre en outre une étape (f) au cours de laquelle on extrude ou on calandre la composition obtenue à l'issue de l'étape e).

Le procédé peut comprendre en outre une étape (g) au cours de laquelle on chauffe soit le mélange obtenu à l'issue de l'étape (e) soit la composition extrudée ou calandrée obtenue à l'issue de l'étape (f) à une température supérieure ou égale à 130°C, de préférence comprise dans un domaine allant de 130°C à 200°C.

A titre d'exemple, la première phase (non-productive) est conduite en une seule étape thermomécanique au cours de laquelle on introduit, dans un mélangeur approprié tel qu'un mélangeur interne usuel, tous les constituants nécessaires, les éventuels agents de recouvrement ou de mise en oeuvre complémentaires et autres additifs divers, à l'exception de le composé polysulfuré de formule générale (I), (y compris ces modes de réalisation préférés et ses variantes préférées) ou le système de réticulation comprenant le composé polysulfuré de formule générale (I), (y compris ces modes de réalisation préférés et ses variantes préférées) et le co-agent. Après refroidissement du mélange ainsi obtenu au cours de la première phase non-productive, on incorpore alors le composé polysulfuré de formule générale (I), (y compris ces modes de réalisation préférés et ses variantes préférées) ou le système de réticulation comprenant le composé polysulfuré de formule générale (I), (y compris ces modes de réalisation préférés et ses variantes préférées) et le co-agent à basse température (i.e. une température inférieure ou égale à 120°C, généralement dans un mélangeur externe tel qu'un mélangeur à cylindres ; le tout est alors mélangé (phase productive) pendant quelques minutes, par exemple entre 5 et 15 min. La composition finale ainsi obtenue peut ensuite être calandrée, par exemple sous la forme d'une feuille, d'une plaque ou encore extrudée.

La réticulation (ou cuisson) est conduite selon tout mode opératoire connue de l'homme du métier, à une température, à une pression et pendant une durée appropriée selon la nature et l'utilisation de la composition. Par exemple, la réticulation est conduite de manière connue à une température généralement supérieure ou égale à 130°C, de comprise dans un domaine allant de 130°C à 200°C, pendant un temps suffisant qui peut varier par exemple entre 5 et 90 min.

### Exemple

L'exemple suivant illustre l'invention sans toutefois la limiter. Il a pour but de mettre en évidence l'amélioration des propriétés d'extensométrie des mélanges réticulés à haute température avec les composés polysulfurés de formule générale (I)par rapport à une composition témoin classique et à une composition conforme à l'art antérieur.

### Composés polysulfurés

La préparation des composés polysulfurés 1 et 2 tels qu'utilisés dans les exemples de composition est décrite ci-dessous.

### A/ Synthèse du composé polysulfuré 1 : 1,8-dioxa-4,5-dithiacyclotridecane-9,13-dione

Le 1,8-dioxa-4,5-dithiacyclotridecane-9,13-dione est synthétisé selon le schéma ci-dessous et selon le protocole de synthèse suivant :

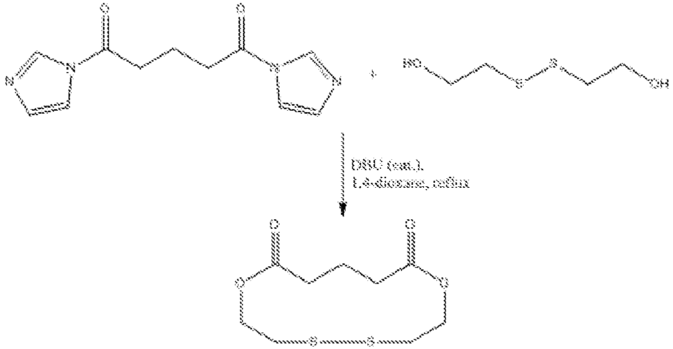

### Synthèse du précurseur : 1,5-di(1H-imidazol-1-yl)pentane-1,5-dione.

La synthèse de ce précurseur est décrite dans la littérature notamment dans Synth. Commun. 1985, 15, 1159-1164 ; J. Chem. Soc. Perkin Trans. 2 1996, 2673-2679 ; J. Am. Chem. Soc. 1989, 111, 6428-6429, selon le schéma réactionnel suivant :

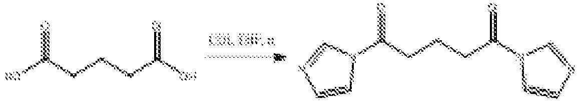

L'acide glutarique (5.00g; 38 mmol) est solubilisée dans le THF anhydre (20 mL). Le 1,1'-carbonyldiimidazole (16.57g; 102 mmol) dans le THF anhydre (80 mL) est ajouté au mélange. Le milieu réactionnel est agité à température ambiante pendant 4h. Le précipité est filtré et lavé par l'éther de pétrole et séché à l'air.

Un solide blanc (8.267 g, 35.60 mmol, rendement 94%) du point de fusion 161-163°C (avec la décomposition) est obtenu.

La pureté molaire est supérieure à 87 % mol (RMN 1H).

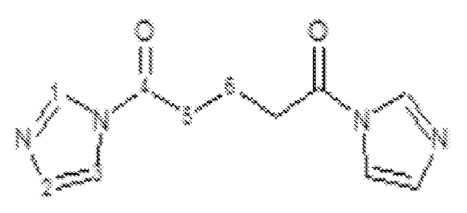

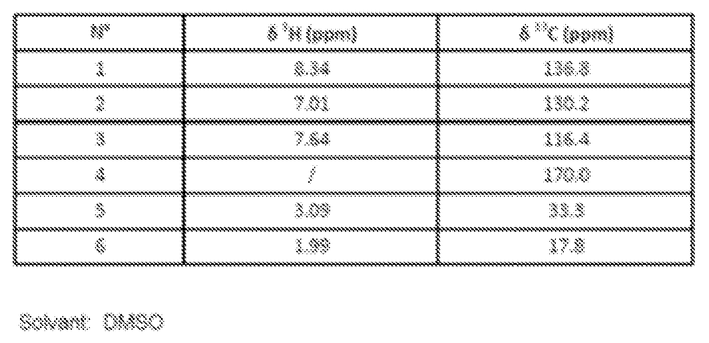

### Synthèse du composé polysulfuré 1 : 1,8-dioxa-4,5-dithiacyclotridecane-9,13-dione

A une suspension de 1,5-di(1H-imidazol-1-yl)pentane-1,5-dione (8.264g; 35.6 mmol) dans le 1,4-dioxane anhydre (100 mL) est ajouté le 2-hydroxyethyl disulfide (5.49g; 35.6 mmol) à température ambiante sous l'agitation intense. La catalyses de 1,8-diazabicyclo[5.4.0]undec-7-ene (3 gouttes) est ajouté au milieu réactionnel et le mélange est chauffé (Tbain = 80°C) pendant 15-20 heures. Apres d'achèvement de la réaction le solvant est évaporé pour obtenir d'huile jaune (14 g) qui se cristallise rapidement à température ambiante. Le produit cru est traité pendant 2 heures à température ambiante par l'EtOH (50 mL) et filtré. Cette procédure est répétée 3 fois. Le précipité est séché sous vide à température ambiante (à 7×10-2 mbar).

Un solide blanc (7.611 g, 30.40 mmol, rendement 85%) du point de fusion 47-49°C est obtenu.

La pureté molaire est supérieure à 93 % mol (RMN 1H)

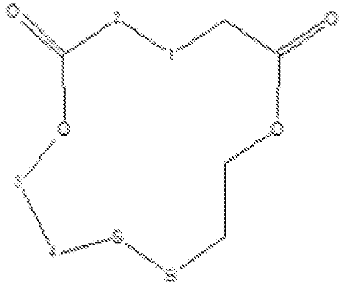

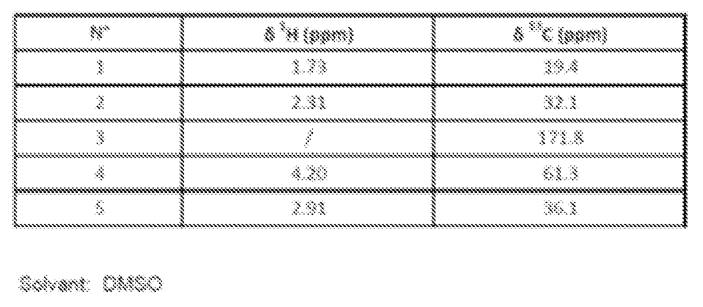

### B/ Synthèse du composé polysulfuré 2 : 1,2-dithia-5,11-diazacyclotridecane-6,10-dione

Le 1,2-dithia-5,11-diazacyclotridecane-6,10-dione est synthétisé selon le schéma réactionnel ci-dessous et selon le protocole de synthèse suivant :

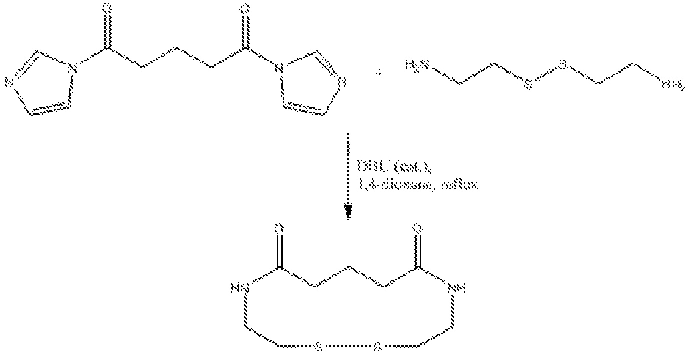

La synthèse du précurseur : 1,5-di(1H-imidazol-1-yl)pentane-1,5-dione est réalisée comme décrit dans la partie A/.

La synthèse du précurseur cystamine est réalisée à partir de cystamine dihydrochloride commerciale, tel que décrit dans la littérature, on citera notamment .Chin. J. Chem. 2011, 29, 531-538 ; J. Organomet. Chem. 2005, 690, 2543-2547, selon le schéma réactionnel suivant :

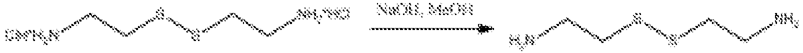

### Synthèse du composé polysulfuré 2 : 1,2-dithia-5,11-diazacyclotridecane-6,10-dione

A une suspension de 1,5-di(1H-imidazol-1-yl)pentane-1,5-dione (8.05g; 34.7 mmol) dans le 1,4-dioxane anhydre (80 mL) est ajouté le cystamine (5.28g; 34.7 mmol) à température ambiante sous l'agitation intense. La catalyses de 1,8-diazabicyclo[5.4.0]undec-7-ene (3 gouttes) est ajouté au milieu réactionnel et le mélange est chauffé à température d'ébullition pendant 18 heures. Apres d'achèvement de la réaction le mélange réactionnel est dilue par l'eau (500 mL) et mélangé pendant 3 heures à température ambiante.

Le précipité amorphe est filtré et lavé par l'eau. Le produit est séché sous l'air à température ambiante.

Un solide jaune (7.778 g, rendement 90%) du point de fusion 196-197°C est obtenu.

La pureté molaire est supérieure à 95 % mol (RMN 1H)

**Tableau d'attribution:**

| 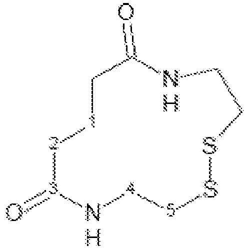 | | |
|---|---|---|
| | δ¹H (ppm) | δC(ppm) |
| 1 | 1.68 | 20.3 |
| 2 | 2.03 | 34.3 |
| 3 | / | 171.4 |
| 4 | 3.28 | 32.6 |
| 5 | 2.74 | 32.2 |

| | | |
|---|---|---|
| Solvant : DMSO | | |

### C/ Synthèse du composé polysulfuré 3 : 1,2,3,4-tetrathiecane

Le 1,2,3,4-tétrathiécane est synthétisé selon le schéma réactionnel ci-dessous et selon le protocole de synthèse suivant :

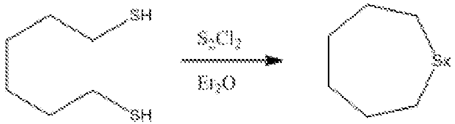

A une solution de 1,6-hexanedithiol (8,0 g, 0,053 mol) dans l'éther éthylique (150 ml) à -3°C (température bain), est ajoutée pendant 60 minutes, goutte à goutte, une solution de S2CI2 (7,19 g, 0.053 mmol) dans l'éther éthylique (80 ml). La température du milieu réactionnel est ramenée à température ambiante (à 23°C) sur 1,5 heures. Puis, le milieu est chauffé 1,5 heures à 30°C (température bain). Le précipité formé est filtré puis solubilisé dans le dichlorométhane (200 ml) à 40°C. Le dichlorométhane est évaporé sous pression réduite (1-2 mbar, 35-40°C).

Après séchage du produit pendant 6 heures sous vide (1-2 mbar, 40°C), une huile très visqueuse est obtenue (8,61 g, rendement de 77%).

La pureté molaire est supérieure à 98 % mol. (RMN 1H).

La distribution des x est suivante : 0,3% pour x=2; 1,2 % pour x=3; 98,5% pour x >4

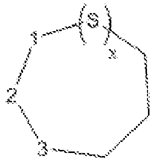

| **N°** | **δ ¹H (ppm)** | **δ ¹³C (pmm)** |
|---|---|---|
| **1** | x=2 : 2,63 ; x=3 : 2,82 ; x=4+ : 2,90 | x=2 : 38,5 ; x=3 : 38,5 ; x=4+ : 39,6 |
| **2** | 1,74 | 28,5 |
| **3** | 1,42 | 27,5 |

### Compositions

Pour les besoins de ces essais, des compositions de caoutchouc ont été préparées conformément à l'invention, dont les formulations sont données dans le tableau 1 ; le taux des différents produits est exprimé en pce (parties en poids pour cent parties en poids d'élastomère).

Pour la fabrication de ces compositions, on a procédé de la manière suivante: on a introduit dans un mélangeur interne, dont la température initiale de cuve était d'environ 50°C, successivement la charge renforçante (noir de carbone), l'élastomère diénique, ainsi que les divers autres ingrédients à l'exception du système de réticulation ; le mélangeur était ainsi rempli à environ 70% (% en volume). On a conduit alors un travail thermomécanique (phase non-productive) en une étape d'environ 3 à 5 min, jusqu'à atteindre une température maximale de "tombée" de 160°C. On a récupéré le mélange ainsi obtenu, on l'a refroidi puis on a incorporé le système de vulcanisation sur un mélangeur externe (homo-finisseur) à 40°C, en mélangeant le tout (phase productive) pendant quelques minutes.

Les compositions sont ensuite calandrées sous forme de plaques de caoutchouc d'épaisseur de 2 à 3 mm.

Les compositions conformes à l'invention C1 et C2 ont été comparées à deux compositions témoin, T1 et T2, de formulation similaire préparées de manière identique, dont seul le système de réticulation diffère.

**Tableau 1**

| Compositions | T1 | T2 | C1 | C2 |
|---|---|---|---|---|
| NR (1) | 100 | 100 | 100 | 100 |
| Silice (2) | 45 | 45 | 45 | 45 |
| Silane (3) | 13 | 13 | 13 | 13 |
| Soufre | 1 | - | - | - |
| Composé polysulfuré 1 (4) | - | - | 5,75 | - |
| Composé polysulfuré 2 (5) | - | - | - | 5,71 |
| Composé polysulfuré 3 (6) | - | 4,87 | | - |
| Oxyde de zinc (7) | 6 | 6 | 6 | 6 |
| Acide stéarique (8) | 2 | 2 | 2 | 2 |
| 6PPD (9) | 2 | 2 | 2 | 2 |
| Accélérateur (10) | 0,75 | 0,75 | 0,75 | 0,75 |
| Accélérateur (11) | 2 | 2 | 2 | 2 |
| Accélérateur (12) | 2 | 2 | 2 | 2 |

| | | | | |
|---|---|---|---|---|
| (1) Caoutchouc naturel (2) Silice « Zeosil 1165MP » commercialisée par la société Solvay ; (3) tétrasulfure de bis(3-triéthoxysilylpropyl), TESPT, "S!69" commercialisé par la société Evonik 1,8-dithiacyclotetradecane 1,8-disulfide (4) Composé polysulfuré 1 : 1,8-dioxa-4,5-dithiacyclotridecane-9,13-dione (5) Composé polysulfuré 2 : 1,2-dithia-5,11-diazacyclotridecane-6,10-dione (6) Composé polysulfuré 3 : 1,2,3,4-tetrathiecane (7) Oxyde de zinc de grade industriel - société Umicore ; (8) Stéarine « Pristerene 4931 » de la société Uniqema ; (9) N-(1,3-diméthylbutyl)-N'-phényl-p-phénylènediamine (Santoflex 6-PPD) de la société Flexsys ; (10) Diphenylguanidine (11) N-cyclohexyl-2-benzothiazol-sulfénamide (« VULKACIT^{®} » de la société Lanxess); (12) Tétrabenzylthiuram disulfide | | | | |

Les propriétés de ces différentes compositions après cuisson respectivement à des températures de 150°C ou de 190°C ont été évaluées et sont présentées dans le tableau 2 ci-dessous.

### Test de traction

Les propriétés mesurées sont les modules des compositions, tels qu'ils sont déterminés lors d'essais de traction. Ces essais permettent de déterminer les contraintes d'élasticité et les propriétés à la rupture. Ils sont effectués conformément à la norme française NF T 46-002 de septembre 1988. On mesure en seconde élongation (i.e. après un cycle d'accommodation) les allongements à la rupture (en %). Les mesures d'allongement à la rupture (notés AR) sont effectuées dans les conditions normales de température (23±2°C) et d'hygrométrie (50+5% d'humidité relative), selon la norme française NF T 40-101 (décembre 1979), et également à 100°C. Les modules sécants nominaux (ou contraintes apparentes, en MPa, rapportées à la déformation, sans unité) à 10 %, 100% ou à 300% d'allongement (notés MA10, MA100 et MA300) et les contraintes vraies à la rupture (en MPa) peuvent également être mesurées.

**Tableau 2**

| Compositions | T1 | T2 | C1 | C2 |
|---|---|---|---|---|
| Après cuisson à 150°C | | | | |
| Allongement rupture (%, 23°C) | 110 | 170 | 415 | 356 |
| Contrainte rutpure (MPa, 23°C) | 8,8 | 17,4 | 25,5 | 22,3 |
| Allongement rupture (%, 100°C) | 97 | 89 | 356 | 276 |
| Contrainte rutpure (MPa, 100°C) | 7,3 | 6,9 | 13,5 | 10,4 |
| Après cuisson à 190°C | | | | |
| Allongement rupture (%, 23°C) | 180 | 175 | 411 | 305 |
| Contrainte rutpure (MPa, 23°C) | 12,7 | 14,9 | 24,4 | 18,8 |
| Allongement rupture (%, 100°C) | 115 | 118 | 324 | 281 |
| Contrainte rutpure (MPa, 100°C) | 6,0 | 7,7 | 11,8 | 10,5 |

L'examen du tableau 2 montre que de façon très surprenante, les compositions conformes à l'invention C1 et C2 présentent des propriétés d'allongement à la rupture et de contrainte à la rupture très supérieures à chacune des compositions témoins T1 et T2. On constate de plus que ce phénomène apparaît aussi bien après cuisson à 150°C, qu'après cuisson à 190°C.

Ainsi il apparaît que les compositions conformes à l'invention qui comportent un composé polysulfuré de formule générale (I), permettent de façon étonnante non seulement de maintenir mais d'améliorer significativement les propriétés à la rupture lors d'une réticulation à haute température.

## Revendications

1. Composition à base d'au moins un polymère insaturé, une charge renforçante, et un composé polysulfuré de formule générale (I) : 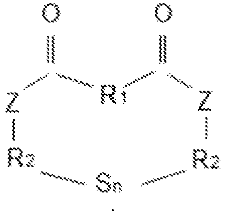 dans laquelle :
n est un nombre supérieur ou égal à 2,
Z représente un atome O ou le groupe -N(H)-,
et R₁ et R₂ représentent chacun un groupement hydrocarboné divalent linéaire ou ramifié, comportant de 1 à 18 atomes de carbone.

2. Composition selon la revendication 1, dans laquelle le polymère insaturé est un élastomère diénique.

3. Composition selon la revendication 2, dans laquelle l'élastomère diénique est choisi dans le groupe constitué par le caoutchouc naturel, les polyisoprènes de synthèse, les polybutadiènes, les copolymères d'isoprène, les copolymères de butadiène et les mélanges de ces élastomères diéniques.

4. Composition selon l'une quelconque des revendications précédentes, dans laquelle R1 et R2 représentent un radical alkylène comportant de 1 à 18 atomes de carbone, de préférence de 1 à 10 atomes de carbone et encore plus préférentiellement de 1 à 7 atomes de carbone.

5. Composition selon l'une quelconque des revendications précédentes, dans laquelle n représente un nombre allant de 2 à 6, plus préférentiellement de 2 à 4.

6. Composition selon l'un quelconque des revendications précédentes, dans laquelle Z représente un atome O.

7. Composition selon l'une quelconque des revendications 1 à 5, dans laquelle Z représente un groupe -N(H)-.

8. Composition selon l'une quelconque des revendications précédentes, dans laquelle le taux du composé polysulfure de formule générale (I) est compris dans un domaine allant de 0,5 à 10 pce, de préférence allant de 0,5 à 5 pce, de préférence allant de 0,5 à 3 pce.

9. Composition selon l'une quelconque des revendications précédentes, dans laquelle la charge renforçante est choisie parmi une charge renforçante inorganique, le noir de carbone et leur mélange.

10. Composition selon l'une quelconque des revendications précédentes, qui ne comprend pas de soufre élémentaire.

11. Composition selon l'une quelconque des revendications 1 à 9, comprenant en outre du soufre élémentaire à un taux inférieur à 1 pce, de préférence inférieur ou égal à 0,5 pce.

12. Composition selon l'une quelconque des revendications précédentes, qui comprend au moins un accélérateur de vulcanisation choisi dans le groupe constitué par la diphényle guanidine (DPG), la triphényle guanidine (TPG), la diorthotolyl guanidine (DOTG), la o-tolylbiguanide (OTBG), le disulfure de benzothiazole (MBTS), le disuflure de tetraméthylthiurame (TMTD), le disulfure de tetrabenzylthiurame (TBzTD), le dibenzyldithiocarbamate de zinc (ZBEC), le zinc N,N'-dimethylcarbamodithioates (ZDMC), le zinc N,N'-diethylcarbamodithioates (ZDEC), le zinc N,N'-dibutylcarbamodithioates (ZDBC), le zinc N,N'-dibenzylcarbamodithioates (ZDBC), le zinc isopropylxanthate (ZIX), et leurs mélanges.

13. Article comprenant au moins une composition telle que définie selon l'une quelconques des revendications précédentes.

14. Article selon la revendication 13, **caractérisé en ce qu'**il est un bandage pneumatique.

## Patentansprüche

1. Zusammensetzung auf Basis von mindestens einem ungesättigten Polymer, einem verstärkenden Füllstoff und einer Polysulfidverbindung der allgemeinen Formel (I): 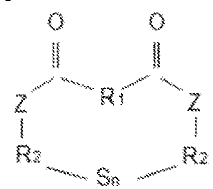 in der:
n eine Zahl größer oder gleich 2 ist,
Z für ein O-Atom oder die Gruppe -N(H)- steht und R₁ und R₂ jeweils für eine lineare oder verzweigte zweiwertige Kohlenwasserstoffgruppe mit 1 bis 18 Kohlenstoffatomen stehen.

2. Zusammensetzung nach Anspruch 1, wobei es sich bei dem ungesättigten Polymer um ein Dienelastomer handelt.

3. Zusammensetzung nach Anspruch 2, wobei das Dienelastomer aus der Gruppe bestehend aus Naturkautschuk, synthetischen Polyisoprenen, Polybutadienen, Isopren-Copolymeren, Butadien-Copolymeren und Mischungen dieser Dienelastomere ausgewählt ist.

4. Zusammensetzung nach einem der vorhergehenden Ansprüche, wobei R₁ und R₂ für einen Alkylenrest mit 1 bis 18 Kohlenstoffatomen, bevorzugt 1 bis 10 Kohlenstoffatomen und noch weiter bevorzugt 1 bis 7 Kohlenstoffatomen stehen.

5. Zusammensetzung nach einem der vorhergehenden Ansprüche, wobei n für eine Zahl im Bereich von 2 bis 6, weiter bevorzugt von 2 bis 4, steht.

6. Zusammensetzung nach einem der vorhergehenden Ansprüche, wobei Z für ein O-Atomen steht.

7. Zusammensetzung nach einem der Ansprüche 1 bis 5, wobei Z für eine Gruppe -N(H)- steht.

8. Zusammensetzung nach einem der vorhergehenden Ansprüche, wobei der Gehalt der Polysulfidverbindung der allgemeinen Formel (I) in einem Bereich von 0,5 bis 10 phe, bevorzugt von 0,5 bis 5 phe, bevorzugt von 0,5 bis 3 phe, liegt.

9. Zusammensetzung nach einem der vorhergehenden Ansprüche, wobei der verstärkende Füllstoff aus einem anorganischen verstärkenden Füllstoff, Ruß und einer Mischung davon ausgewählt ist.

10. Zusammensetzung nach einem der vorhergehenden Ansprüche, die keinen elementaren Schwefel umfasst.

11. Zusammensetzung nach einem der Ansprüche 1 bis 9, die außerdem elementaren Schwefel in einem Gehalt von weniger als 1 phe, bevorzugt kleiner oder gleich 0,5 phe, umfasst.

12. Zusammensetzung nach einem der vorhergehenden Ansprüche, die mindestens einen Vulkanisationsbeschleuniger umfasst, der aus der Gruppe bestehend aus Diphenylguanidin (DPG), Triphenylguanidin (TPG), Diorthotolylguanidin (DOTG), o-Tolylbiguanid (OTBG), Benzothiazoldisulfid (MBTS), Tetramethylthiuramdisulfid (TMTD), Tetrabenzylthiuramdisulfid (TBzTD), Zinkdibenzyldithiocarbamat (ZBEC), Zink-N,N'-dimethylcarbamodithioaten (ZDMC), Zink-N,N'-diethylcarbamodithioaten (ZDEC), Zink-N,N'-dibutylcarbamodithioaten (ZDBC), Zink-N,N'-dibenzylcarbamodithioaten (ZDBC), Zinkisopropylxanthat (ZIX) und Mischungen davon ausgewählt ist.

13. Artikel, umfassend mindestens eine Zusammensetzung gemäß einem der vorhergehenden Ansprüche.

14. Artikel nach Anspruch 13, **dadurch gekennzeichnet, dass** es sich um einen Luftreifen handelt.

## Claims

1. Composition based on at least one unsaturated polymer, a reinforcing filler and a polysulfide compound of general formula (I): 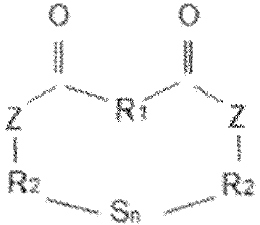 in which:
n is a number greater than or equal to 2,
Z represents an O atom or the -N(H)- group,
and R₁ and R₂ each represent a linear or branched divalent hydrocarbon group comprising from 1 to 18 carbon atoms.

2. Composition according to Claim 1, in which the unsaturated polymer is a diene elastomer.

3. Composition according to Claim 2, in which the diene elastomer is selected from the group consisting of natural rubber, synthetic polyisoprenes, polybutadienes, isoprene copolymers, butadiene copolymers and the mixtures of these diene elastomers.

4. Composition according to any one of the preceding claims, in which R₁ and R₂ represent an alkylene radical comprising from 1 to 18 carbon atoms, preferably from 1 to 10 carbon atoms and more preferentially still from 1 to 7 carbon atoms.

5. Composition according to any one of the preceding claims, in which n represents a number ranging from 2 to 6, more preferentially from 2 to 4.

6. Composition according to any one of the preceding claims, in which Z represents an O atom.

7. Composition according to any one of Claims 1 to 5, in which Z represents an -N(H)- group.

8. Composition according to any one of the preceding claims, in which the content of the polysulfide compound of general formula (I) is within a range extending from 0.5 to 10 phr, preferably extending from 0.5 to 5 phr, preferably extending from 0.5 to 3 phr.

9. Composition according to any one of the preceding claims, in which the reinforcing filler is chosen from an inorganic reinforcing filler, carbon black and their mixture.

10. Composition according to any one of the preceding claims, which does not comprise elemental sulfur.

11. Composition according to any one of the preceding Claims 1 to 9, additionally comprising elemental sulfur at a content of less than 1 phr, preferably of less than or equal than 0.5 phr.

12. Composition according to any one of the preceding claims, which comprises at least one vulcanization accelerator selected from the group consisting of diphenylguanidine (DPG), triphenylguanidine (TPG), di(ortho-tolyl)guanidine (DOTG), o-tolylbiguanide (OTBG), benzothiazyl disulfide (MBTS), tetramethylthiuram disulfide (TMTD), tetrabenzylthiuram disulfide (TBzTD), zinc dibenzyldithiocarbamate (ZBEC), zinc N,N'-dimethylcarbamodithioates (ZDMC), zinc N,N'-diethylcarbamodithioates (ZDEC), zinc N,N'-dibutylcarbamodithioates (ZDBC), zinc N,N'-dibenzylcarbamodithioates (ZDBC), zinc isopropyl xanthate (ZIX) and their mixtures.

13. Article comprising at least one composition as defined according to any one of the preceding claims.

14. Article according to Claim 13, **characterized in that** it is a pneumatic tyre.
